# EUROPEAN PATENT SPECIFICATION

(11) **EP 1 083 782 B1**
(45) Date of publication and mention of the grant of the patent: **09.07.2003**
(21) Application number: 99920321.9
(22) Date of filing: 04.05.1999
(51) Int. Cl.: A01D 34/68, B60K 26/04, F02D 11/02

(54) **SPEED CONTROL FOR VARIABLE SPEED LAWN MOWER**
GESCHWINDIGKEITSREGELVORRICHTUNG FÜR RASENMÄHER MIT VERÄNDERLICHER GESCHWINDIGKEIT
COMMANDE DE VITESSE POUR TONDEUSE A GAZON A VITESSE VARIABLE

(30) Priority: 12.06.1998 US 89077 P
(43) Date of publication of application: 21.03.2001
(73) Proprietor: MTD Products, Inc., Valley City, Ohio 44280 (US)
(72) Inventor: SCHAEDLER, Axel, Medina, OH 44256 (US)
(74) Representative: Freischem, Stephan, Dipl.-Ing.
(86) International application number: US9909728
(87) International publication number: WO99063802

(56) References cited:
- EP-A- 0 393 907
- DE-U- 8 516 262
- US-A- 4 620 575
- US-A- 5 375 674

## Description

### Technical Field

This invention pertains to the art of riding lawn mowers and more specifically to riding lawn mowers with variable speed controls, such as hydrostatic driven and variable speed drives, and even more specifically to a speed control mechanism or cruise control for such riding lawn mowers.

### Background Art

It is known for riding lawn mowers to have drive systems including transmissions whereby the speed of the lawn mower is infinitely, variably controllable. It is also known, in other types of lawn mowers not having variable speed control, to control the speed of the lawn mower by placing the transmission into certain discreet gear arrangements to obtain certain discreet speeds. For example, lawn mowers may have a five speed or a six-speed transmission. In such cases, by placing the throttle at a specific location and placing the gearshift at a specific gearing arrangement, e.g., fourth speed or gear, the lawn mower will assume a constant speed.

US Patent No. 4,620,575 to Cuba et al discloses a control arrangement for a lawn and garden vehicle having a manually movable member provided for controlling the speed of operation of the tractor. The patent further discloses that a speed and direction control number is mounted on a pivot shaft for rocking movement from a neutral position to a forward position. A linkage connects the speed and direction control member to a hydrostatic transmission and a pivotal speed control lever is provided for causing movement of the linkage. The patent further discloses that means are further provided for setting the minimum speed; this means including a minimum speed setting lever movable by the operator and engagable with a pivotal speed control lever, so as to selectively support the speed control lever in a selected position, wherein the vehicle will be driven at a selected minimum speed. The patent also discloses a detent means for releasably supporting the minimum speed setting lever in one of a plurality of selected positions,

German Patent No. DE-U-8516262 discloses a device for saving fuel with a control of the regulating or throttle linkage, for motor vehicles. The patent further discloses an adjustment locking mechanism shaft supported on both ends in the flanges of a module board in such a way that it can shift axially. The patent also discloses a hole plate which is penetrated with bearing play by the adjustment locking mechanism shaft which is supported by a leverage pin. A spring force is disclosed which impinges on the adjustment locking mechanism hole plate engaging the hole plate into an interference position with the shaft. The patent also discloses an electromagnetic pull-type magnet which, when energized, disengages the hole plate from the interference position with the shaft.

However, prior to this invention, a speed control as described herein was not available for a lawn mower having a variable speed drive.

### Disclosure of the Invention

According to one aspect of the present invention, a mower using the speed control mechanism of this invention is provided. The mower includes a frame having a first portion with a first hole and a second portion with a second hole, an engine operatively mounted to the frame, and a plurality of wheels operatively mounted to the frame including a drive wheel for use in providing locomotion for the mower. The mower also has a mower deck operatively mounted to the frame for use in selectively cutting associated vegetation and drive means operatively mounted to the frame for use in transferring power from the engine to the drive wheel, The speed control mechanism is used to control the drive means. The speed control mechanism includes a first operator control device, a first member and securing means for use in selectively securing the first member in place with respect to the drive means. The first member has a first end operatively connected to the drive means and a second end operatively connected to the first operator control device. The first member is operatively received within the first and second holes of the frame.

According to another aspect of the present invention, the securing means includes a "washer" shaped disc having an opening. The first member is operatively received within the opening in the disc. The disc is selectively adjustable into two primary positions with respect to the first member - a neutral position and an interference position. When in the neutral position, the plane of the disc is substantially perpendicular to the axial centerline CL of the first member. For this reason, the first member is free to move within the opening in the disc thus freely permitting the speed of the drive means to be changed. When in the interference position, the disc is tilted such that the plane of the disc is no longer perpendicular to the longitudinal axial centerline CL of the first member. This results in an interference or friction between the outer surface of the first member and the interior surfaces of the disc around the opening. This interference position prevents movement of the first member and effectively fixes the speed of the mower as desired.

According to still another aspect of the invention, a method of fixing the speed of a mower is provided. The first operator control device is adjusted as desired thereby adjusting the speed of the mower. Next the second operator control device is activated thereby tilting the disc into a first interference position with respect to the first member. The drive means is then fixed to a first driving speed. After that, the disc may be moved out of the first interference position with respect to the first member permitting the disc to be forced by biasing means into the neutral position. The first operator control device is then re-adjusted as desired thereby re-adjusting the speed of the mower. Next, the second operator control device is activated thereby tilting the disc into a second interference position with respect to the first member. Finally, the drive means is fixed to a second driving speed.

One advantage of this invention is that a lawn mower having a variable speed drive can now be provided with a fixed speed control mechanism.

Another advantage of this invention is that it is inexpensive and easy to operate.

Still other benefits and advantages of the invention will become apparent to those skilled in the art to which it pertains upon a reading and understanding of the following detailed specification.

### Brief Description of the Drawings

FIGURE 1 is a side view of a riding lawn mower including the inventive speed control mechanism of this invention.
FIGURE 2 is a schematic, cross-sectional side view of the inventive speed control mechanism with the disc in a neutral position with respect to the first member.
FIGURE 3 is a schematic, cross-sectional side view of the inventive speed control mechanism with the disc in an interference position with respect to the first member.
FIGURE 4 is a plan view of the bottom surface of the disc.

### Description of the Preferred Embodiment

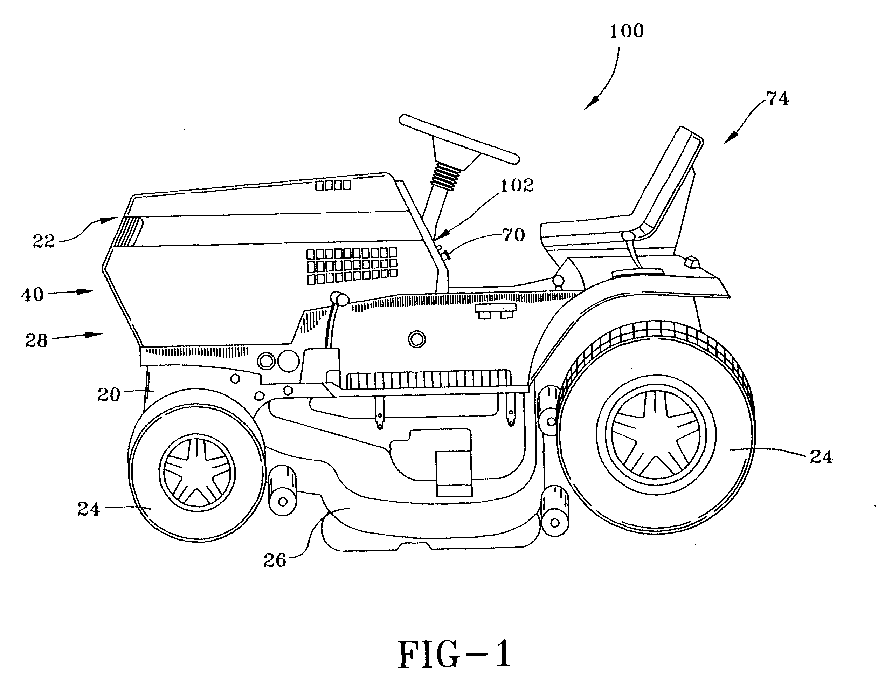

Referring now to the drawings wherein the showings are for purposes of illustrating a preferred embodiment on the invention only and not for purposes of limiting the same, FIGURE 1 show a mower 100 equipped with the speed control mechanism 40 of this invention. The innovative speed control mechanism 40 is especially beneficial for a riding lawn mower featuring a constant speed control but the invention is applicable to walk-behind mowers, other mowers, other vehicles and other applications as well. The mower 100 has a frame 20, an engine 22 operatively mounted to the frame 20 and a plurality of wheels 24 including at least one drive wheel for use in providing locomotion for the mower 100. The wheels 24 are operatively connected to the frame 20 as is a mower deck 26. The mower deck 26 is used, as is commonly known in the art, to selectively cut associated vegetation such as grass (not shown). The mower 100 also includes drive means 28 operatively mounted to the frame 28 and used in transferring power from the engine 22 to the drive wheel 24. The particular drive means 28 may include a transmission or other similar gearing or may be any other type of drive means 28 chosen with sound engineering judgment. Throughout this application the term "up" will refer to the top of the FIGURES and "down" with refer to the bottom of the FIGURES as the invention is illustrated, but the invention can be oriented otherwise and still function well.

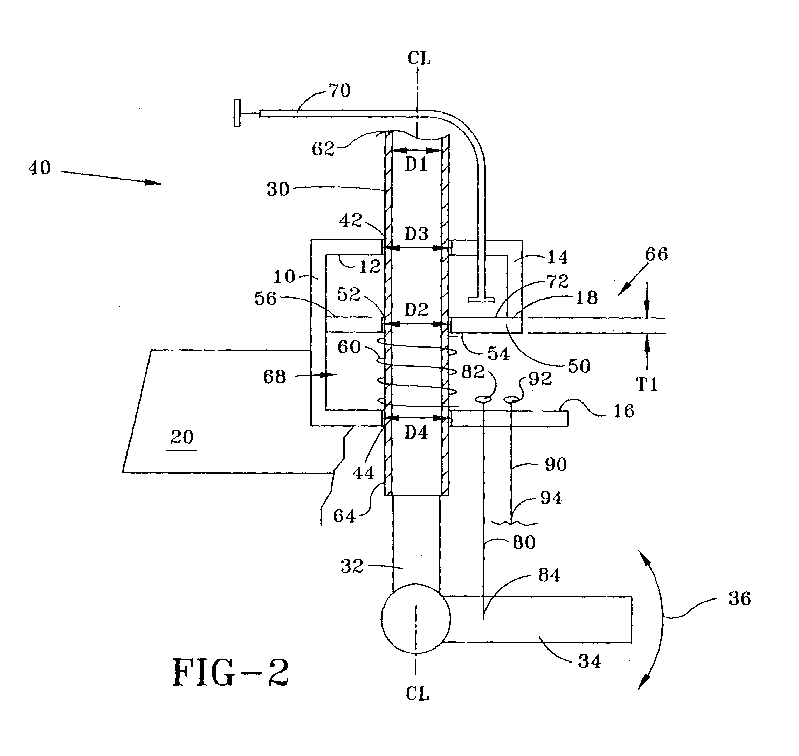

With reference to FIGURES 2-3 the speed control mechanism 40 which is used to control the drive means 28 includes a bracket 10 that may be mounted somewhere on the frame 20 of the mower 100. It should be understood that instead of a separate bracket 10, the form of the bracket could be made integral with the frame 20. The bracket 10 includes a first portion 12 having a first hole 42 with a diameter D3 and a second portion 16 having a second hole 44 with a diameter D4. As shown, extending from the first portion 12 toward the second portion 16 is an arm 14.

With continuing reference to FIGURES 2-3, a first member 30 is used to connect an operator control device to the drive means 28. Thus, the first member has a first end 62 operatively connected to the drive means 28 (for example the first end 62 may connect to the components of a transmission) and a second end 64 operatively connected to a first operator control device 34. The first member 30 can be sized and shaped as required but is preferably cylindrically shaped with a diameter D1. As shown, the first member 30 is received within the first and second holes 42, 44 of the bracket 10. There is enough space or gap between the outer surface of the first member 30 and the bracket 10 around the holes 42, 44 to permit the first member 30 to be selectively moved without contacting the bracket 10. Thus, the first member may be moved up and down or may be rotated or may experience other types of adjustment without contacting the bracket 10.

Still referring to FIGURES 2-3, the first operator control device 34 can be of any type chosen with sound engineering judgment such as a hand operated lever. In the embodiment shown however, the first operator control device 34 is a foot pedal and more specifically an accelerator pedal 34. Thus, the first operator control device 34 can be a control device used to control the speed of the mower. The first member 30 is operatively connected to the first operator control device 34 by any means chosen with sound engineering judgment such as, for example, by using a second member 32 as shown. Thus, in essence, as the operator pushes the foot pedal 34 forward or releases it as indicated by arrow 36, the second member 32 communicates motion to the first member 30 thereby moving and making adjustments in the drive means 28 of the mower 100 to change the speed of the mower 100.

With reference now to FIGURES 2-4, securing means 66 is used to selectively secure the first member 30 in place with respect to the drive means 28. In other words.the securing means 66, when activated, secures the first member 30 such that the drive means 28 provides a constant speed for the mower 100. Although the securing means 66 can be of any type chosen with sound engineering judgment, in the preferred embodiment a disc 50 is used. The disc 50 has an opening 52 with a diameter D2 that receives the first member 30. The disc 50 has a thickness T1. In the preferred embodiment, the thickness T1 should be chosen with respect to sound engineering judgment. In the preferred embodiment, the thickness T1 is 1.5 mm although it is believed to be able to vary between 0.5 mm and 10 mm. The diameter D2 of the opening 52 is chosen with respect to the diameter D1 of the first member 30 and the diameters D3, D4 of the holes 42, 44 in the bracket 10. In the preferred embodiment D1 is 8 mm, D2 is 8.17 mm, D3 is about 8.5 mm and D4 is also 8.5 mm.

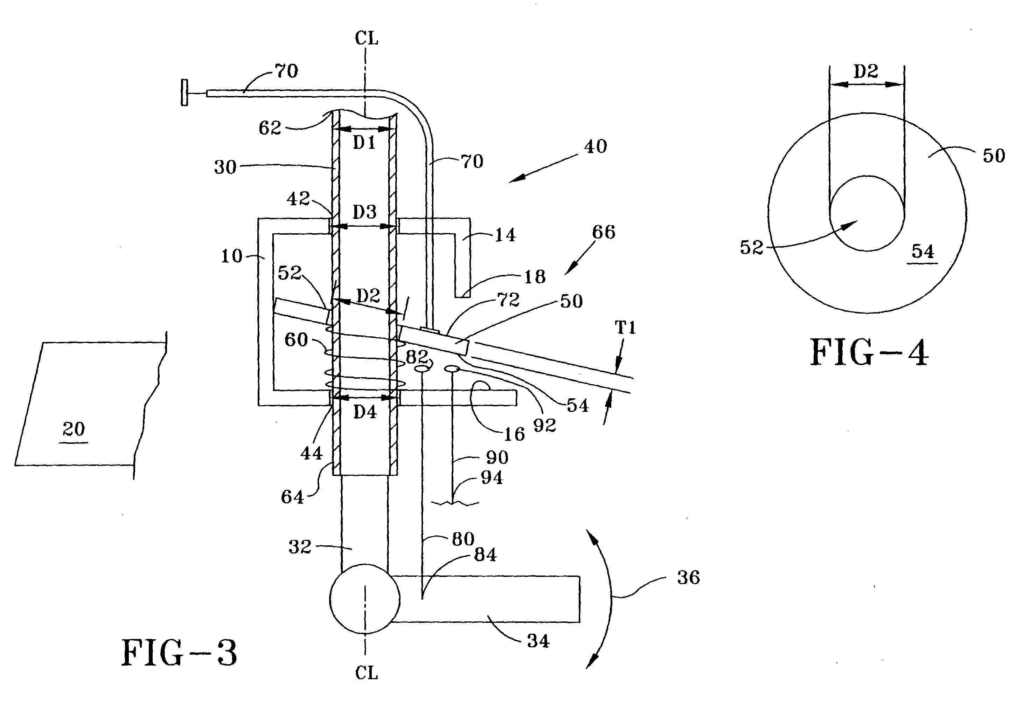

With continuing reference to FIGURES 2-4, it is preferred that the disc 50 is "washer" shaped and that the opening 52 is through its center as shown in FIGURE 4. The disc 50 is preferably positioned between the first and second portions 12, 16 of the bracket 10 as shown. This is not a requirement for this invention. Most preferably the holes 42. 44 and the opening 54 are co-linear. It should be noted that the disc 50 is selectively adjustable into two primary positions with respect to the first member 30. The first position is the neutral position shown in FIGURE 2, In this position, the plane of the disc 50 is substantially perpendicular to the axial centerline CL of the first member. For this reason, the first member 30 is free to move within the opening 52 in the disc 50 thus freely permitting the speed of the drive means 28 to be changed. The second position is the secured or interference position shown in FIGURE 3. In this position, the disc is tilted such that the plane of the disc 50 is no longer perpendicular to the longitudinal axial centerline CL of the first member 30. This results in an interference or friction between the outer surface of the first member 30 and the interior surfaces of the disc 50 around the opening 52. This interference position prevents movement of the first member 30 and effectively fixes the speed of the mower 100 as desired.

With reference now to FIGURES 2-3, biasing means 68 is used to bias the disc 50 into the neutral position shown in FIGURE 2. Although the biasing means 68 can be of any type chosen with sound engineering judgment, preferably it encompasses a spring 60. The spring 60 may receive the first member 30 and may be positioned between the disc 50 and the second portion 16 of the bracket 10 as shown. Thus, the spring 60 is effective to bias the disc 50 upwardly toward a lowermost surface 18 of arm 14. The upward movement of the disc 50 is limited by the arm 14.

With reference now to FIGURES 1-3, to adjust the disc 50 from the neutral position (FIGURE 2) into the interference position (FIGURE 3), a second operator control device 70 may be used. Preferably, the second operator control device 70 is a push cable that is mounted somewhere within the reach of the operator, such as on the mower's control panel or dashboard 102. The push cable 70 is operatively connected to the disc 50 and touches it at point 72. When the operator attains a desirable speed and wishes to fix the speed through the speed control mechanism 40, the operator pushes the push cable 70 which overcomes the biasing force of the spring 60 and tilts the disc 50 from the neutral position shown in FIGURE 1 to the interference position shown in FIGURE 2. Thus, it should be understood that the speed control mechanism 40 of this invention can be used to perform the function of a cruise control.

Still referring to FIGURES 1-3, it is also desirable to adjust the disc 50 from the interference position (FIGURE 3) to the neutral position (FIGURE 2). Different methods of accomplishing this will now be disclosed. A first element 80 may be operatively associated with the disc 50 at a first end 82 of the first element 80 and with the first operator control device 34 at a second end 84. Therefore, if the operator of the mower adjusts the speed either upwardly or downwardly with the first operator control device 34, the first element 80 disengages the disc 50, therefore removing the interference fit. At such occurrence, the spring 60 pushes the disc 50 back into the neutral position illustrated in FIGURE 2 where it is parallel to the first portion 12 of the bracket 10. In this location, the first member 30 can move freely again and the speed control is easily adjusted. If the operator wishes to reengage the speed control at this new, second, desired speed, the operator simply pushes on the push cable 70 again, thereby tilting the disc 50 down to the second position as illustrated in FIGURE 2 and again locking the mower at that speed. However, in the preferred embodiment, the first element 80 is unnecessary, as the movement of the foot pedal 34 causes first member 30 to move, thereby dislodging the disc 50 and returning it to its first position without any other action by the operator.

With continuing reference to FIGURES 1-3, in the preferred embodiment the mower 100 also has braking means 74 for use in stopping the motion of the mower 100. The particular braking means 74 can be of any type chosen with sound engineering judgment. The braking means 74 may include, for example, a brake pedal (not shown). In any event, it is preferred that a brake component 90 be provided that is operatively connected to the disc 50 at a first end 92 and to the braking means 74, such as to the brake pedal, at a second end 94. The brake component 90 and the brake pedal operate similarly to the first element 80 and the foot pedal 34 discussed immediately above. Namely, when the operator changes the speed from the first desired speed selected through the speed control by applying the brake, the brake component 90 automatically dislodges the disc 50 and the spring 60 automatically restores the disc 50 to the neutral position shown in FIGURE 1.

While the invention has been described in connection with specific embodiments and applications, no intention to restrict the invention to the examples shown is contemplated. It will be apparent to those skilled in the art that the above methods may incorporate changes and modifications without departing from the general scope of this invention. It is intended to include all such modifications and alterations in so far as they come within the scope of the appended claims or the equivalents thereof.

Having thus described the invention, it is now claimed:

## Claims

1. A vehicle including
- a frame (20) having a first portion (12) with a first hole (42) and a second portion (16) with a second hole (44);
- an engine (22) operatively mounted to said frame (20);
- a plurality of wheels (24) operatively mounted to said frame (20) including a drive wheel (24) for use in providing locomotion for said vehicle (100);
- drive means (28) operatively mounted to said frame (20) for use in transferring power from said engine (22) to said drive wheel (24); and
- a speed control mechanism (40) for use in controlling said drive means (28);
said speed control mechanism (40) having a first operator control device (34) and comprising
- a first member (30) having a first end (62) operatively connected to said drive means (28) and a second end (64) operatively connected to said first operator control device (34), said first member (30) being operatively received within said first and second holes (42, 44) of said frame (20);
- securing means (66) for use in selectively securing said first member (30) in place with respect to said drive means (28), said securing means (66) comprising a disc (50) positioned between said first and second portions (12, 16) of said frame (20) and having an opening, said first member (30) being operatively received within said opening in said disc (50), said disc (50) being tiltable with respect to said first member (30); and
- biasing means (68) for use in biasing said disc (50) into a neutral position, said first member (30) being free to move within said opening (52) in said neutral position and said biasing means being a spring.

2. Vehicle according to claim 1, **characterized in that** said first member (30) is substantially cylindrically shaped.

3. Vehicle according to claim 1, **characterized in that** an arm (14) extends from said first portion (12) of said frame (20), said disc (50) selectively contacting said arm (14) when said disc (50) is placed into said neutral position.

4. Vehicle according to claim 1, **characterized in that** said speed control mechanism (40) further comprises a second operator control device (70) for use in selectively tilting said disc (50) into an interference with respect to said first member.

5. Vehicle according to claim 1, **characterized in that** it further comprises braking means (74) for use in stopping the motion of said vehicle (100), said braking means (74) selectively moving said disc (50) into said neutral position.

6. Vehicle according to claim 1, **characterized in that** the vehicle is a mower (100) including a mower deck (26) operatively mounted to said frame (20) for use in selectively cutting associated vegetation, whereby said opening and said first and second holes (42, 44) are substantially co-linear.

7. Vehicle according claim 6, **characterized in that** said biasing means (68) is a spring (60) that receives said first member (30), said spring (60) being positioned between said disc (50) and said second portion (16) of said frame (20).

8. Vehicle according to claim 6, **characterized in that** an arm (14) extends from said first portion (12) of said frame (20), said disc (50) selectively contacting said arm (14) when said disc (50) is placed into said neutral position.

9. Vehicle according to claim 6, **characterized in that** said speed control mechanism (40) further comprises:
- a second operator control device (70) for use in selectively tilting said disc (50) into an interference position with respect to said first member (30).

10. Vehicle according to claim 6, **characterized in that** it further comprises:
- braking means (74) for use in stopping the motion of said mower, said braking means (74) selectively moving said disc (50) into said neutral position.

11. Vehicle according to claim 6, **characterized in that**
- said first hole (42) has a diameter D3 and said second hole (44) has a diameter D4; and that
- said first member (30) is substantially cylindrically shaped having a diameter D1, said opening (52) in said disc (50) having a diameter D2, said diameter D2 being greater than said diameter D1, said diameters D3, D4 being greater than said diameter D2.

12. Vehicle according to claim 9, **characterized in that** said first operator control device (34) is an accelerator pedal and said second operator control device (70) is a push cable.

13. A method of fixing the speed of a mower (100) including the step of providing said mower (100) with
- a frame (20);
- an engine (22) operatively mounted to said frame (20);
- a plurality of wheels (24) operatively mounted to said frame (20) and including a drive wheel (24) for use in providing locomotion for said mower (100);
- a mower deck (26) operatively mounted to said frame (20) for use in selectively cutting associated vegetation; and
- drive means (28) operatively mounted to said frame (20) for use in transferring power from said engine (22) to said drive wheel (24), said frame (20) having a first portion (12) with a first hole (42) and a second portion (14) with a second hole (44),
said method comprising the steps of:
- providing a speed control mechanism (40) for use in controlling said drive means (28), said speed control mechanism (40) including first and second operator control devices (34,70), a first member (30) having a first end (62) operatively connected to said drive means (28) and a second end (64) operatively connected to said first operator control device (34), and a disc (50) having an opening (52), said first member (30) being operatively received within said first and second holes (42,44) of said frame (20) and within said opening (52) in said disc (50);
- adjusting said first operator control device (34) as desired thereby adjusting the speed of said mower (100);
- activating said second operator control device (70) thereby tilting said disc (50) into a first interference position with respect to said first member (30); and
- fixing said drive means (28) to a first driving speed.

14. Method according to claim 13, **characterized in that** said step of activating said second operator control device (70) thereby tilting said disc (50) into a first interference position with respect to said first member (30), comprises the step of:
- at least partially overcoming a biasing force.

15. Method according to claim 13, **characterized in that** said step of adjusting said first operator control device (34) as desired thereby adjusting the speed of said mower (100), comprises the step of pushing an accelerator pedal, and that said step of activating said second operator control device (70) thereby tilting said disc (50) into a first interference position with respect to said first member (30), comprises the step of activating a push cable.

16. Method according to claim 13, **characterized in that** after said step of fixing said drive means (28) to a first driving speed, said method further comprises the steps of:
- moving said disc (50) out of the said first interference position with respect to said first member (30);
- biasing said disc (50) to a neutral position;
- adjusting said first operator control device (34) as desired thereby re-adjusting the speed of said mower (100);
- activating said second operator control device (70) thereby tilting said disc (50) into a second interference position with respect to said first member (30); and,
- fixing said drive means (28) to a second driving speed.

17. Method according to claim 16, **characterized in that** said step of biasing said disc (50) to a neutral position, comprises the steps of:
- forcing said disc (50) into position such that the plane of said disc (50) is substantially perpendicular to the axial centerline CL of said first member (30); and
- contacting an arm (14) that extends from said frame (20) with said disc (50).

18. Method according to claim 13, **characterized in that** said method further comprises the step of:
- applying braking means (74) thereby moving said disc (50) out of said first interference position with respect to said first member (30).

## Patentansprüche

1. Fahrzeug umfassend
- einen Rahmen (20), der einen ersten Abschnitt (12) mit einem ersten Loch (42) und einen zweiten Abschnitt (16) mit einem zweiten Loch (44) aufweist;
- einen Motor (22), der an dem genannten Rahmen (20) wirkend angeordnet ist;
- eine Vielzahl von Rädern (24), die an dem genannten Rahmen (20) wirkend angeordnet ist, umfassend ein Antriebsrad (24) zur Verwendung der Bereitstellung der Fortbewegung des genannten Fahrzeugs (100);
- ein an dem genannten Rahmen (20) wirkend angeordnetes Antriebsmittel (28) zur Verwendung bei der Kraftübertragung von dem genannten Motor (22) zu dem genannten Antriebsrad (24); und
- eine Geschwindigkeits-Steuer/Regelvorrichtung (40) zur Verwendung bei der Steuerung/Regelung des genannten Antriebsmittels (28);
wobei die genannte Geschwindigkeits-Steuer/Regelvorrichtung (40) eine erste Bedien-Steuer/Regelvorrichtung (34) aufweist und folgendes umfaßt:
- ein erstes Element (30), das ein erstes Ende (62), das wirkend mit dem genannten Antriebsmittel (28) verbunden ist, und ein zweites Ende (64), das wirkend mit der genannten ersten Bedien-Steuer/Regelvorrichtung (34) verbunden ist, aufweist, wobei das genannte erste Element (30) wirkend innerhalb des genannten ersten und zweiten Lochs (42,44) des genannten Rahmens (20) aufgenommen ist;
- Sicherungsmittel (66) zur Verwendung bei der selektiven örtlichen Sicherung des genannten ersten Elementes (30) in bezug auf das genannte Antriebsmittel (28), wobei das genannte Sicherungsmittel (66) eine Scheibe (50) aufweist, die zwischen dem genannten ersten und zweiten Abschnitt (12,16) des genannten Rahmens (20) angeordnet ist und eine Öffnung aufweist, wobei das genannte erste Element (30) wirkend innerhalb der genannten Öffnung in der genannten Scheibe (50) aufgenommen ist, wobei die genannte Scheibe (50) kippbar in bezug auf das genannte erste Element (30) ist; und
- Vorspannmittel (68) zur Verwendung bei der Vorspannung der genannten Scheibe (50) in eine neutrale Position, wobei das genannte erste Element (30) in der genannten neutralen Position frei innerhalb der genannten Öffnung (52) beweglich ist und das genannte Vorspannmittel eine Feder ist.

2. Fahrzeug nach Anspruch 1, **dadurch gekennzeichnet, daß** das genannte erste Element (30) im wesentlichen zylindrisch geformt ist.

3. Fahrzeug nach Anspruch 1, **dadurch gekennzeichnet, daß** sich ein Arm (14) von dem genannten ersten Abschnitt (12) des genannten Rahmens (20) erstreckt, wobei die genannte Scheibe (50) selektiv den genannten Arm (14) berührt, wenn die genannte Scheibe (50) in die genannte neutrale Position gebracht wird.

4. Fahrzeug nach Anspruch 1, **dadurch gekennzeichnet, daß** die genannte Geschwindigkeits-Steuer/Regelvorrichtung (40) ferner eine zweite Bedien-Steuer/Regelvorrichtung (70) zur Verwendung bei der selektiven Kippung der genannten Scheibe (50) in einen Eingriff in bezug auf das genannte erste Element aufweist.

5. Fahrzeug nach Anspruch 1, **dadurch gekennzeichnet, daß** es ferner ein Bremsmittel (74) zur Verwendung beim Anhalten der Bewegung des genannten Fahrzeugs (100) aufweist, wobei das genannte Bremsmittel (74) die genannte Scheibe (50) selektiv in die genannte neutrale Position bewegt.

6. Fahrzeug nach Anspruch 1, **dadurch gekennzeichnet, daß** das Fahrzeug ein Mäher (100) ist, umfassend ein wirkend an dem genannten Rahmen (20) angeordnetes Mähergehäuse (26) zur Verwendung bei der selektiven Schnittarbeit zugeordneter Vegetation, wobei die genannte Öffnung und das genannte erste und zweite Loch (42,44) im wesentlichen kolinear sind.

7. Fahrzeug nach Anspruch 6, **dadurch gekennzeichnet, daß** das genannte Vorspannmittel (68) eine Feder (60) ist, die das genannte erste Element (30) aufnimmt, wobei die genannte Feder (60) zwischen der genannten Scheibe (50) und dem genannten zweiten Abschnitt (16) des genannten Rahmens (20) angeordnet ist.

8. Fahrzeug nach Anspruch 6, **dadurch gekennzeichnet, daß** sich ein Arm (14) von dem genannten ersten Abschnitt (12) des genannten Rahmens (20) erstreckt, wobei die genannte Scheibe (50) selektiv den genannten Arm (14) berührt, wenn die genannte Scheibe (50) in die genannte neutrale Position gebracht wird.

9. Fahrzeug nach Anspruch 6, **dadurch gekennzeichnet, daß** die genannte Geschwindigkeits-Steuer/Regelvorrichtung (40) ferner umfaßt:
- eine zweite Bedien-Steuer/Regelvorrichtung (70) zur Verwendung bei der selektiven Kippung der genannten Scheibe (50) in eine Eingriffsposition in bezug auf das genannte erste Element (30).

10. Fahrzeug nach Anspruch 6, **dadurch gekennzeichnet, daß** es ferner umfaßt:
- Bremsmittel (74) zur Verwendung beim Anhalten der Bewegung des genannten Mähers, wobei das genannte Bremsmittel (74) die genannte Scheibe (50) selektiv in die genannte neutrale Position bewegt.

11. Fahrzeug nach Anspruch 6, **dadurch gekennzeichnet, daß**
- das genannte erste Loch (42) einen Durchmesser D3 und das genannte zweite Loch (44) einen Durchmesser D4 aufweist; und daß
- das genannte erste Element (30) im wesentlichen zylindrisch geformt ist und einen Durchmesser D1 aufweist, wobei die genannte Öffnung (52) in der genannten Scheibe (50) einen Durchmesser D2 aufweist,
wobei der genannte Durchmesser D2 größer als der genannte Durchmesser D1 ist, wobei die genannten Durchmesser D3, D4 größer als der genannte Durchmesser D2 sind.

12. Fahrzeug nach Anspruch 9, **dadurch gekennzeichnet, daß** die genannte erste Bedien-Steuer/Regelvorrichtung (34) ein Beschleunigungspedal ist und die genannte zweite Bedien-Steuer/Regelvorrichtung (70) ein Druckkabel ist.

13. Verfahren zur Feststellung der Geschwindigkeit eines Mähers (100), umfassend den Schritt der Ausstattung des genannten Mähers (100) mit
- einem Rahmen (20);
- einem Motor (22), der wirkend an dem genannten Rahmen (20) angeordnet ist;
- einer Vielzahl von Rädern (24), die wirkend an dem genannten Rahmen (20) angeordnet ist und die ein Antriebsrad (24) zur Verwendung bei der Schaffung der Fortbewegung des genannten Mähers (100) umfaßt;
- einem Mähergehäuse (26), das wirkend an dem genannten Rahmen (20) zur Verwendung bei der selektiven Schneidarbeit zugeordneter Vegetation angeordnet ist; und
- einem Antriebsmittel (28), das wirkend zur Verwendung bei der Kraftübertragung von dem genannten Motor (22) zu dem genannten Antriebsrad (24) an dem genannten Rahmen (20) angeordnet ist, wobei der genannte Rahmen (20) einen ersten Abschnitt (12) mit einem ersten Loch (42) und einen zweiten Abschnitt (14) mit einem zweiten Loch (44) aufweist,
wobei das genannte Verfahren die folgenden Schritte aufweist:
- Bereitstellung einer Geschwindigkeits-Steuer/Regelvorrichtung (40) zur Verwendung bei der Steuerung/Regelung des genannten Antriebsmittels (28), wobei die genannte Geschwindigkeits-Steuer/Regelvorrichtung (40) eine erste und eine zweite Bedien-Steuer/Regelvorrichtung (34,70), ein erstes Element (30), das ein erstes Ende (62), das wirkend mit dem genannten Antriebsmittel (28) verbunden ist, und ein zweites Ende (64), das wirkend mit der genannten ersten Bedien-Steuer/Regelvorrichtung (34) verbunden ist, aufweist, und eine Scheibe (50), die eine Öffnung (52) aufweist, umfaßt, wobei das genannte erste Element (30) wirkend innerhalb des genannten ersten und zweiten Lochs (42,44) des genannten Rahmens (20) und innerhalb der genannten Öffnung (52) in der genannten Scheibe (50) aufgenommen ist;
- Einstellung der genannten ersten Bedien-Steuer/Regelvorrichtung (34) wie gewünscht und dadurch Einstellung der Geschwindigkeit des genannten Mähers (100);
- Aktivieren der genannten zweiten Bedien-Steuer/Regelvorrichtung (70) und dadurch Kippung der genannten Scheibe (50) in eine erste Eingriffsposition in bezug auf das genannte erste Element (30); und
- Feststellung des genannten Antriebsmittels (28) auf eine erste Antriebsgeschwindigkeit.

14. Verfahren nach Anspruch 13, **dadurch gekennzeichnet, daß** der genannte Schritt des Aktivierens der genannten zweiten Bedien-Steuer/Regelvorrichtung (70), wodurch die genannten Scheibe (50) in eine erste Eingriffsposition in bezug auf das genannte erste Element (30) gekippt wird, den Schritt der:
- zumindest teilweisen Überwindung einer Vorspannkraft aufweist.

15. Verfahren nach Anspruch 13, **dadurch gekennzeichnet, daß** der genannte Schritt der Einstellung der genannten ersten Bedien-Steuer/Regelvorrichtung (34) wie gewünscht, wodurch die Geschwindigkeit des genannten Mähers (100) eingestellt wird, den Schritt des Drückens eines Beschleunigungspedals aufweist und daß der genannte Schritt des Aktivierens der genannten zweiten Bedien-Steuer/Regelvorrichtung (70), wodurch die genannte Scheibe (50) in eine erste Eingriffsposition in bezug auf das genannte erste Element (30) gekippt wird, den Schritt des Aktivierens eines Druckkabels aufweist.

16. Verfahren nach Anspruch 13, **dadurch gekennzeichnet, daß** nach dem genannten Schritt der Feststellung des genannten Antriebsmittels (28) auf eine erste Antriebsgeschwindigkeit das genannte Verfahren ferner die folgenden Schritte aufweist:
- Bewegung der genannten Scheibe (50) aus der genannten ersten Eingriffsposition in bezug auf das genannte erste Element (30);
- Vorspannen der genannten Scheibe (50) in eine neutrale Position;
- Einstellung der genannten ersten Bedien-Steuer/Regelvorrichtung (34) wie gewünscht und dadurch Nachstellung der Geschwindigkeit des genannten Mähers (100);
- Aktivieren der genannten zweiten Bedien-Steuer/Regelvorrichtung (70) und dadurch Kippung der genannten Scheibe (50) in eine zweite Eingriffsposition in bezug auf das genannte erste Element (30); und
- Feststellung des genannten Antriebsmittels (28) auf eine zweite Antriebsgeschwindigkeit.

17. Verfahren nach Anspruch 16, **dadurch gekennzeichnet, daß** der genannte Schritt des Vorspannens der genannten Scheibe (50) in eine neutrale Position die folgenden Schritte aufweist:
- Bewegen der genannten Scheibe (50) in eine Position derart, daß die Ebene der genannten Scheibe (50) im wesentlichen senkrecht zu der axialen Zentrumslinie CL des genannten ersten Elements (30) ist; und
- Berührung eines sich von dem genannten Rahmen (20) erstreckenden Arms (14) mit der genannten Scheibe (50).

18. Verfahren nach Anspruch 13, **dadurch gekennzeichnet, daß** das genannte Verfahren ferner den Schritt aufweist:
- Anbringung von Bremsmitteln (74) und dadurch Bewegung der genannten Scheibe (50) aus der genannten ersten Eingriffsposition in bezug auf das genannte erste Element (30).

## Revendications

1. Véhicule, comportant:
- un châssis (20) ayant une première partie (12) munie d'un premier trou (42) et une seconde partie (16) munie d'un second trou (44),
- un moteur (22) monté de manière opérationnelle sur ledit châssis (20),
- une pluralité de roues (24) montées de manière opérationnelle sur ledit châssis (20) comportant une roue d'entraînement (24) destinée à être utilisée pour fournir une locomotion audit véhicule (100),
- des moyens d'entraînement (28) montés de manière opérationnelle sur ledit châssis (20) destinés à être utilisés pour transférer une puissance à partir dudit moteur (22) vers ladite roue d'entraînement (24), et
- un mécanisme de commande de vitesse (40) destiné à commander lesdits moyens d'entraînement (28),
ledit mécanisme de commande de vitesse (40) ayant un premier dispositif de commande par l'opérateur (34), et comportant
- un premier élément (30) ayant une première extrémité (62) reliée de manière opérationnelle auxdits moyens d'entraînement (28) et une seconde extrémité (64) reliée de manière opérationnelle audit premier dispositif de commande par l'opérateur (34), ledit premier élément (30) étant reçu de manière opérationnelle dans lesdits premier et second trous (42, 44) dudit châssis (20),
- des moyens de fixation (66) destinés à être utilisés pour fixer de manière sélective ledit premier élément (30) en place par rapport auxdits moyens d'entraînement (28), lesdits moyens de fixation (66) comportant un disque (50) positionné entre lesdites première et seconde parties (12, 16) dudit châssis (20) et comportant une ouverture, ledit premier élément (30) étant reçu de manière opérationnelle dans ladite ouverture située dans ledit disque (50), ledit disque (50) pouvant basculer par rapport audit premier élément (30), et
- des moyens de rappel (68) destinés à être utilisés pour rappeler ledit disque (50) dans une position neutre,
ledit premier élément (30) étant libre de se déplacer à l'intérieur de ladite ouverture (52) dans ladite position neutre et lesdits moyens de rappel étant un ressort.

2. Véhicule selon la revendication 1, **caractérisé en ce que** ledit premier élément (30) a une forme sensiblement cylindrique.

3. Véhicule selon la revendication 1, **caractérisé en ce qu'**un bras (14) s'étend à partir de ladite première partie (12) dudit châssis (20), ledit disque (50) venant en contact de manière sélective avec ledit bras (14) lorsque ledit disque (50) est placé dans ladite position neutre.

4. Véhicule selon la revendication 1, **caractérisé en ce que** le mécanisme de commande de yitesse (40) comporte de plus un second dispositif de commande par l'opérateur (70) destiné à être utilisé pour basculer de manière sélective ledit disque (50) dans une interférence avec ledit premier élément.

5. Véhicule selon la revendication 1, **caractérisé en ce qu'**il comporte de plus des moyens de freinage (74) destinés à être utilisés pour stopper le déplacement dudit véhicule (100), lesdits moyens de freinage (74) déplaçant de manière sélective ledit disque (50) dans ladite position neutre.

6. Véhicule selon la revendication 1, **caractérisé en ce que** le véhicule est une tondeuse (100) comportant un plateau de tondeuse (26) monté de manière opérationnelle sur ledit châssis (20) destiné à être utilisé pour couper de manière sélective une végétation associée, de sorte que ladite ouverture et lesdits premier et second trous (42, 44) sont sensiblement co-linéaires.

7. Véhicule selon la revendication 6, **caractérisé en ce que** lesdits moyens de rappel (68) sont un ressort (60) qui reçoit ledit premier élément (30), ledit ressort (60) étant positionné entre ledit disque (50) et ladite seconde partie (16) dudit châssis (20).

8. Véhicule selon la revendication 6, **caractérisé en ce qu'**un bras (14) s'étend à partir de ladite première partie (12) dudit châssis (20), ledit disque (50) venant en contact de manière sélective avec ledit bras (14) lorsque ledit disque (50) est placé dans ladite position neutre.

9. Véhicule selon la revendication 6, **caractérisé en ce que** ledit mécanisme de commande de vitesse (14) comporte de plus :
- un second dispositif de commande par l'opérateur (70) destiné à être utilisé pour basculer de manière sélective ledit disque (50) dans une position d'interférence par rapport audit premier élément (30).

10. Véhicule selon la revendication 6, **caractérisé en ce qu'**il comporte de plus :
- des moyens de freinage (74) destinés à être utilisés pour stopper le déplacement de ladite tondeuse, lesdits moyens de freinage (74) déplaçant de manière sélective ledit disque (50) dans ladite position neutre.

11. Véhicule selon la revendication 6, **caractérisé en ce que** :
- ledit premier trou (42) a un diamètre D3 et ledit second trou (44) a un diamètre (D4), et **en ce que**
- ledit premier élément (30) a une forme sensiblement cylindrique ayant un diamètre D1, ladite ouverture (52) située dans ledit disque (50) ayant un diamètre D2, ledit diamètre D2 étant supérieur audit diamètre D1, lesdits diamètres D3, D4 étant supérieurs audit diamètre D2.

12. Véhicule selon la revendication 9, **caractérisé en ce que** ledit premier dispositif de commande par l'opérateur (34) est une pédale d'accélérateur et ledit second dispositif de commande par l'opérateur (70) est un câble de poussée.

13. Procédé pour fixer la vitesse d'une tondeuse (100), comportant l'étape consistant à munir ladite tondeuse (100) :
- d'un châssis (20),
- d'un moteur (22) monté de manière opérationnelle sur ledit châssis (20),
- d'une pluralité de roues (24) montées de manière opérationnelle sur ledit châssis (20) et comportant une roue d'entraînement (24) destinée à être utilisée pour fournir une locomotion à ladite tondeuse (100),
- d'un plateau de tondeuse (26) monté de manière opérationnelle sur ledit châssis (20) destiné à être utilisé pour couper de manière sélective une végétation associée, et
- de moyens d'entraînement (28) montés de manière opérationnelle sur ledit châssis (20) destinés à être utilisés pour transférer une puissance depuis ledit moteur (22) vers ladite roue d'entraînement (24), ledit châssis (20) ayant une première partie (12) munie d'un premier trou (42) et une seconde partie (14) munie d'un second trou (44),
ledit procédé comportant les étapes consistant à :
- fournir un mécanisme de commande de vitesse (40) destiné à être utilisé pour commander lesdits moyens d'entraînement (28), ledit mécanisme de commande de vitesse (40) comportant des premier et second dispositifs de commande par l'opérateur (34, 70), un premier élément (30) ayant une première extrémité (62) reliée de manière opérationnelle auxdits moyens d'entraînement (28) et une seconde extrémité (64) reliée de manière opérationnelle audit dispositif de commande par l'opérateur (34), et un disque (50) comportant une ouverture (52), ledit premier élément (30) étant reçu de manière opérationnelle dans lesdits premier et second trous (42, 44) dudit châssis (20) et dans ladite ouverture (52) située dans ledit disque (50),
- ajuster ledit premier dispositif de commande par l'opérateur (34) comme souhaité, de manière à ajuster la vitesse de ladite tondeuse (100),
- activer ledit second dispositif de commande par l'opérateur (70) de manière à basculer ledit disque (50) dans une première position d'interférence par rapport audit premier élément (30), et
- fixer lesdits moyens d'entraînement (28) à une première vitesse d'entraînement.

14. Procédé selon la revendication 13, **caractérisé en ce que** ladite étape d'activation dudit second dispositif de commande par l'opérateur, (70) basculant ainsi ledit disque (50) dans une première position d'interférence par rapport audit premier élément (30), comporte l'étape consistant à :
- surmonter au moins partiellement une force de rappel.

15. Procédé selon la revendication 13, **caractérisé en ce que** ladite étape consistant à ajuster, comme souhaité, ledit premier dispositif de commande par l'opérateur (34), ajustant ainsi la vitesse de ladite tondeuse (100), comporte l'étape consistant à pousser une pédale d'accélérateur, et **en ce que** ladite étape consistant à activer ledit second dispositif de commande par l'opérateur (70), basculant ainsi ledit disque (50) dans une première position d'interférence par rapport audit premier élément (30), comporte l'étape consistant à activer un câble de poussée.

16. Procédé selon la revendication 13, **caractérisé en ce qu'**après ladite étape consistant à fixer lesdits moyens d'entraînement (28) à une première vitesse d'entraînement, ledit procédé comporte de plus les étapes consistant à :
- déplacer ledit disque (50) en dehors de ladite première position d'interférence par rapport audit premier élément (30),
- rappeler ledit disque (50) vers une position neutre,
- ajuster ledit premier dispositif de commande par l'opérateur (34) comme souhaité, réajustant ainsi la vitesse de ladite tondeuse (100),
- activer ledit second dispositif de commande par l'opérateur (70), basculant ainsi ledit disque (50) dans une seconde position d'interférence par rapport audit premier élément (30), et
- fixer lesdits moyens d'entraînement (28) à une seconde vitesse d'entraînement.

17. Procédé selon la revendication 16, **caractérisé en ce que** ladite étape consistant à rappeler ledit disque (50) vers une position neutre, comporte les étapes consistant à :
- forcer ledit disque (50) dans une position telle que le plan dudit disque (50) est sensiblement perpendiculaire à l'axe CL dudit premier élément (30), et
- mettre en contact un bras (14) qui s'étend à partir dudit châssis (20) avec ledit disque (50).

18. Procédé selon la revendication 13, **caractérisé en ce que** ledit procédé comporte de plus l'étape consistant à :
- appliquer des moyens de freinage (74), déplaçant ainsi ledit disque (50) à l'extérieur de ladite première position d'interférence par rapport audit premier élément (30).
